# EUROPÄISCHE PATENTSCHRIFT

(11) **EP 0 863 036 B1**
(45) Veröffentlichungstag und Bekanntmachung des Hinweises auf die Patenterteilung: **19.06.2002**
(21) Anmeldenummer: 98102785.7
(22) Anmeldetag: 18.02.1998
(51) Int. Cl.: B60J 10/08, B60R 13/06, B60J 10/00

(54) **Dichtungsprofil**
Sealing profile
Profilé d'étanchéité

(30) Priorität: 05.03.1997 DE 19708931
(43) Veröffentlichungstag der Anmeldung: 09.09.1998
(73) Patentinhaber: ContiTech Profile GmbH, 30165 Hannover (DE)
(72) Erfinder: Klein, Jürgen, 30457 Hannover (DE); Kassel, Dieter, 30952 Ronnenberg (DE)
(74) Vertreter: Schneider, Egon

(56) Entgegenhaltungen:
- DE-A- 19 544 155
- US-A- 4 919 471
- PATENT ABSTRACTS OF JAPAN vol. 7, no. 177 (M-233) [1322] , 5.August 1983 & JP 58 078825 A (KINUGAWA GOMU), 12.Mai 1983,
- PATENT ABSTRACTS OF JAPAN vol. 8, no. 136 (M-304) [1573] , 23.Juni 1984 & JP 59 034918 A (NISSAN JIDOSHA), 25.Februar 1984,

## Beschreibung

Die Erfindung betrifft ein Dichtunsprofil gemäß dem Oberbegriff des Patentanspruchs 1. Ein derartiges Dichtungsprofil ist aus DE-A-195 44 155 bekannt.

Es sind zahlreiche Ausführungsformen von elastischen Profilen bekannt, die - wie beispielsweise der Gegenstand der EP 0 294 345 B1 - in Kraftfahrzeugkarosserien als Türund/oder Kofferraumdichtungen dienen. Zusätzlich kann die Forderung bestehen, mittels desselben Dichtunsprofils einen dichtenden Übergang vom Rand der Tür- bzw. Kofferraumöffnung zu angrenzenden Bauteilen - insbesondere zu Verkleidungsteilen des Kraftfahrzeug-Innenraumes - zu gewährleisten. Ein solcher dichtender Übergang ist dabei in der Regel nur in denjenigen Längsabschnitten des Dichtungsprofils erforderlich, in denen ein solches Verkleidungsteil anliegt, während er im übrigen überflüssig ist oder sogar störend sein kann.

Die bisher diesbezüglich bekanntgewordenen Lösungsversuche konnten nicht befriedigen. Entsprechende Profile waren nicht ausreichend biegewillig, um ihre Funktion auch in kleinen Biegeradien zu erfüllen, sie erforderten einen hohen Herstellungsaufwand, und/oder ihre Dichtwirkung war insgesamt nicht ausreichend. Es stellte sich daher die Aufgabe, ein Dichtungsprofil der eingangs genannten Art zu schaffen, das sowohl als umlaufende Spaltdichtung funktioniert als auch - insbesondere in bestimmten Längsabschnitten - eine wirksame Abdichtung gegenüber angrenzenden Bauteilen, wie Verkleidungsteilen des Kraftfahrzeug-Innenraumes, bildet.

Erfindungsgemäß wird diese Aufgabe durch ein Dichtungsprofil der eingangs genannten Gattung gelöst, das die im kennzeichnenden Teil des Patentanspruchs 1 genannten Merkmale besitzt. Es zeichnet sich gegenüber bekannten Lösungen sowohl durch eine vereinfachte Herstellung als auch durch verwendungstechnische Vorteile aus, und es erfüllt nicht nur alle vorstehend genannten Forderungen auf verblüffend einfache Weise, sondern überzeugt außerdem durch hohe Funktionssicherheit bezüglich der Dichtwirkung sowie durch kostengünstige Herstellung und einfache Montage.

Das erfindungsgemäße Dichtungsprofil weist in herkömmlicher Weise einen Befestigungsteil auf, der beispielsweise einen U-förmigen Querschnitt besitzt, eine metallische Verstärkungseinlage enthält und durch Klemmwirkung an einem die betreffende Karosserieöffnung umgebenden Flansch fixierbar ist. Mit diesem Befestigungsteil können übliche Dichtelemente verbunden sein, die lippen- oder schlauchförmig in Längsrichtung verlaufen und einstückig mit ihm gebildet oder nachträglich stoffschlüssig angesetzt sind und die den Spalt zwischen dem Rand der Karosserieöffnung und einer sie verschließenden Tür oder Klappe elastisch ausfüllen. Gemäß der vorliegenden Erfindung wird die Abdichtung des Überganges zu einem angrenzenden Bauteil auf völlig unkonventionelle Weise dadurch erzielt, daß an dem Befestigungsteil an der dem besagten Bauteil zugewandten Seite eine in Längsrichtung verlaufende Hohlkammer vorgesehen ist, die in dem an dem besagten Bauteil zur Anlage kommenden Längsabschnitt - und vorzugsweise nur in diesem - mit einem in der Längsrichtung des Dichtungsprofils verlaufenden Schlitz versehen ist derart, daß die Längskante des Bauteils in diesen Schlitz einsteckbar ist. Die Längsränder des Schlitzes - oder zumindest einer von ihnen - legen sich nach Art von Dichtlippen eng und bündig an den Rand des Bauteils an und bilden einen sicher abdichtenden, das Eindringen von Wasser und Schmutz in den Zwischenraum zuverlässig verhindernden Übergang zu dem Bauteil.

Der Längsschlitz ist vorzugsweise als Schnitt - insbesondere als Stanzschnitt - durch die bereits vernetzte bzw. vulkanisierte Wandung der Hohlkammer gebildet. Er kann jedoch sehr vorteilhaft auch dadurch erzeugt sein, daß in die Wandung der Hohlkammer eine in Längsrichtung verlaufende Schwächungslinie eingeformt ist, die bei oder nach der Montage des Dichtungsprofils - insbeondere partiell - aufgerissen wird, so daß dort ein Schlitz entsteht.

Zweckmäßig endet der besagte Schlitz jeweils in einer gerundeten - insbesondere kreisrunden - Ausnehmung. Durch diese wird verhindert, daß der Schlitz durch Weiteraufreißen unbeabsichtigt über seine vorgesehene, auf das betreffende angrenzende Bauteil abgestimmte Länge hinaus verlängert wird.

Die Zeichnung erläutert die vorliegende Erfindung anhand eines vereinfacht perspektivisch bzw. im Querschnitt dargestellten Ausführungsbeispiels, und zwar zeigt
- Fig. 1: ein erfindungsgemäßes Dichtungsprofil in gestreckter Form,
- Fig. 2: ein beispielsweise an der waagerechten Unterkante einer Türöffnung angebrachtes und sich am senkrechten Türholm fortsetzendes rechtwinklig gebogenes erfindungsgemäßes Dichtungsprofil vor der Anbringung eines im Bereich des Türschwellers an die Türöffnung angrenzenden Verkleidungsteils und
- Fig. 3: dasselbe Dichtungsprofil nach dem Einsetzen des Verkleidungsteils.

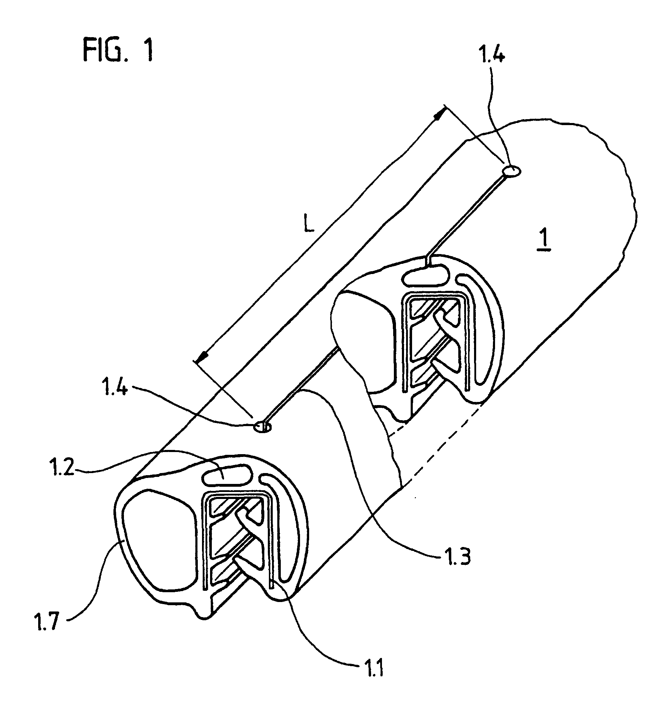

Wie Figur 1 zeigt, weist ein erfindungsgemäßes Dichtungsprofil 1 bespielsweise einen durch eine Metalleinlage 1.1 verstärkten Befestigungsteil mit U-förmigem Querschnitt auf, der auf einen die betreffende Karosserieöffnung umgebenden Flansch aufsteckbar und an diesem in üblicherweise fixierbar ist. Der Befestigungsteil trägt an der Seite, an der die Tür oder Klappe beim Verschließen der Karosserieöffnung zur Anlage kommt, beispielsweise einen etwa schlauchförmigen Dichtkörper 1.7. In seinem Scheitelbereich weist er eine Hohlkammer 1.2 auf, deren Außenwandung mit einem Schlitz 1.3 der Länge L versehen ist, der in kreisrunden Ausnehmungen 1.4 endet. Die Länge L entspricht der Längsabmessung des Bauteils, gegenüber dem das Profil einen dichten Übergang schaffen soll.

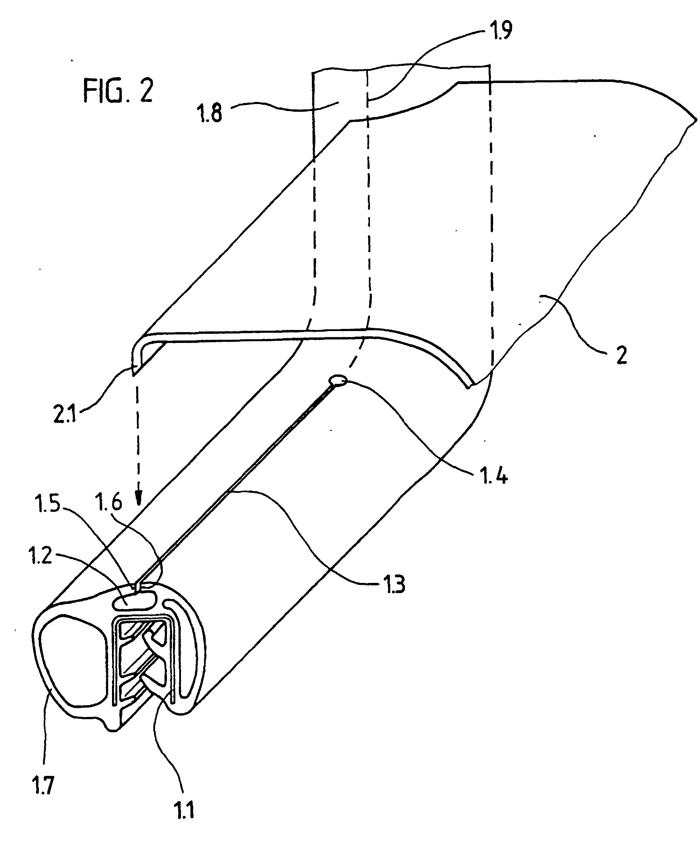

In Figur 2 ist der Verlauf eines erfindungsgemäßen Dichtungsprofils 1 in einem unteren Eckbereich einer Kraftfahrzeug-Türöffnung dargestellt, und zwar vor der Montage eines Verkleidungsteils 2, das im Bereich des Türschwellers an den Rand der Türöffnung anschließen soll. Der Türschweller, der Befestigungsflansch zum Aufstecken des Profils sowie der senkrechte Türholm, an dem die Fortsetzung 1.8 des Dichtungsprofils 1 im Anschluß an den rechtwinklig gebogenen Eckbereich weitergeführt ist, sind nicht dargestellt.

Der an der Hohlkammer 1.2 des Dichtungsprofils 1 angebrachte Schlitz 1.3 endet an der kreisrunden Ausnehmung 1.4, und der weitere Verlauf 1.8 des Dichtungsprofils, an dem kein dichtender Übergang zu einem Verkleidungsteil 2 oder einem anderen Bauteil vorgesehen ist, weist keinen Schlitz auf. Es ist aber denkbar, daß der weitere Verlauf 1.8 des Profils für die Anbringung eines Schlitzes vorbereitet ist, indem dort in die Wandung der Hohlkammer 1.2 - insbesondere fluchtend zu dem Schlitz 1.3 - eine in Figur 2 gestrichelt angedeutete Schwächungslinie 1.9 eingeformt ist, die durch - insbesondere abschnittsweises - Aufreißen leicht zu einem Schlitz geöffnet werden kann, falls in diesem Bereich ebenfalls ein entsprechender dichtender Übergang zu einem Verkleidungsteil o.ä. gefordert ist.

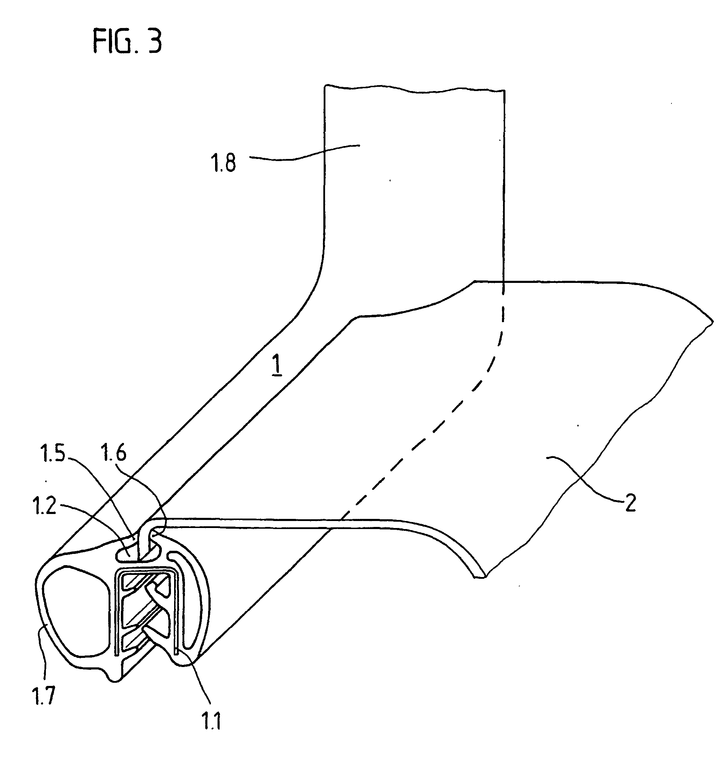

Figur 3 zeigt das erfindungsgemäße Dichtungsprofil 1 mit dem Verkleidungsteil 2, nachdem das Verkleidungsteil 2 durch Einstecken seiner Längskante 2.1 in den Schlitz 1.3 der Hohlkammer 1.2 in seine bestimmungsgemäße Position gebracht ist. Die Längsränder 1.5 bzw. 1.6 des Schlitzes liegen nach Art von Dichtlippen entlang der Längskante 2.1 an dem Verkleidungsteil 2 an und schaffen - entsprechend der gestellten Aufgabe - einen dichtenden Übergang zu diesem.

Durch die bevorzugte Ausbildung des Querschnitts der Hohlkammer 1.2 derart, daß ihre Abmessung in Richtung der sich in den Eckbereichen der Türöffnung ergebenden Krümmung wesentlich geringer - höchstens halb so groß - ist als senkrecht dazu, wird sichergestellt, daß in den Eckbereichen keine Stauchfalten auftreten und daß die Längsränder 1.5 und 1.6 des Schlitzes 1.3 eine ausreichende Querschnittserstreckung aufweisen können, um sicher als Dichtlippen zu wirken.

Abweichend von der Darstellung der Zeichnung kann es vorteilhaft sein, den Schlitz 1.3 asymmetrisch zum Querschnitt der Hohlkammer 1.2 anzuordnen. Hierdurch ergeben sich unterschiedlich breite Dichtlippen 1.5 und 1.6, beispielsweise derart, daß nur der auf der Oberseite der Verkleidungsteils 2 aufliegende Hohlkammerrand eine wirksame Dichtlippe 1.5 bildet.

## Patentansprüche

1. Dichtungsprofil (1) aus elastomeren Werkstoffen, das zur Abdichtung des umlaufenden Spaltes zwischen dem Rand einer durch eine Tür bzw. Klappe verschließbaren Öffnung in einer Kraftfahrzeugkarosserie dient und das eine angeformte Dichtzone (1.5, 1.6) zur Abdichtung des Übergangs zu einem an die Öffnung angrenzenden Verkleidungsteil (2) o.ä. aufweist,
**dadurch gekennzeichnet,**
**daß** es an seiner dem Verkleidungsteil (2) zugewandten Außenseite eine in Längsrichtung verlaufende Hohlkammer (1.2) aufweist, deren Außenwandung in dem zur Anlage an dem Verkleidungsteil (2) bestimmten Längsabschnitt mit einem in Längsrichtung verlaufenden Schlitz (1.3) versehen ist, in den eine Längskante (2.1) des Verkleidungsteils (2) einsteckbar ist, so daß ihre zu dem Schlitz (1.3) parallelen benachbarten Wandungsbereiche nach Art von Dichtlippen (1.5 und/oder 1.6) entlang der Längskante (2.1) an dem Verkleidungsteil (2) anliegen.

2. Dichtungsprofil nach Anspruch 1, **dadurch gekennzeichnet, daß** es ausschließlich in dem zur Anlage an dem Verkleidungsteil (2) bestimmten Längsabschnitt der Hohlkammer (1.2) einen Längsschlitz (1.3) aufweist.

3. Dichtungsprofil nach Anspruch 1 oder 2, **dadurch gekennzeichnet, daß** der Schlitz (1.3) als Schnitt durch die bereits vernetzte bzw. vulkanisierte Profilwandung gebildet ist.

4. Dichtungsprofil nach einem der Ansprüche 1 oder 2, **dadurch gekennzeichnet, daß** der Schlitz (1.3) durch - insbesondere partielles - Aufreißen einer bei der Formung des Dichtungsprofils in der Außenwandung der Hohlkammer (1.2) erzeugten Schwächungslinie gebildet ist.

5. Dichtungsprofil nach einem der Ansprüche 1 bis 4, **dadurch gekennzeichnet, daß** der Schlitz (1.3) an seinen Enden durch gerundete Ausnehmungen (1.4) begrenzt ist.

6. Dichtungsprofil nach einem der Ansprüche 1 bis 5, **dadurch gekennzeichnet, daß** die Hohlkammer (1.2) einen flachen Querschnitt aufweist derart, daß ihre Abmessung in Richtung einer vorgesehenen Krümmung des Dichtungsprofils höchstens die Hälfte der dazu senkrechten Abmessung beträgt.

7. Dichtungsprofil nach einem der Ansprüche 1 bis 6, **dadurch gekennzeichnet, daß** der Schlitz (1.3) derart asymmetrisch zum Querschnitt der Hohlkammer 1.2 angeordnet ist, daß sich Dichtlippen (1.5, 1.6) unterschiedlicher Breite ergeben, insbesondere, daß nur einer der beiden Ränder des Schlitzes (1.3) eine wirksame Dichtlippe (1.5) bildet.

## Claims

1. Sealing profile (1) formed from elastomeric materials, said profile serving to seal the circumferential gap between the edge of an opening in an automotive vehicle bodywork, which opening is closable by a door or flap respectively, and said profile having a moulded-on sealing zone (1.5, 1.6) for sealing the transition to a covering member (2) or the like, which member abuts against the opening, **characterised in that** it has, on its external surface facing the covering member (2), a hollow chamber (1.2) which extends in the longitudinal direction, the external wall of said chamber being provided, in the longitudinal portion intended for abutment against the covering member (2), with a slot (1.3) which extends in the longitudinal direction, and into which is insertable a longitudinal edge (2.1) of the covering member (2), so that the adjacent wall regions of said chamber, parallel to the slot (1.3), abut against the covering member (2) in the manner of sealing lips (1.5 and/or 1.6) along the longitudinal edge (2.1).

2. Sealing profile according to claim 1, **characterised in that** it has an elongate slot (1.3) exclusively in the longitudinal portion of the hollow chamber (1.2) intended to abut against the covering member (2).

3. Sealing profile according to claim 1 or 2, **characterised in that** the slot (1.3) is formed as a cut through the profile wall, which has already been cross-linked or respectively vulcanised.

4. Sealing profile according to one of claims 1 or 2, **characterised in that** the slot (1.3) is formed by tearing-open - more especially partially - a line of weakness produced during the moulding of the sealing profile in the external wall of the hollow chamber (1.2).

5. Sealing profile according to one of claims 1 to 4, **characterised in that** the slot (1.3) is defined at its ends by rounded recesses (1.4).

6. Sealing profile according to one of claims 1 to 5, **characterised in that** the hollow chamber (1.2) has a flat cross-section so that its maximum dimension, when viewed with respect to the direction of an envisaged curvature of the sealing profile, is half the dimension perpendicular thereto.

7. Sealing profile according to one of claims 1 to 6, **characterised in that** the slot (1.3) is disposed asymmetrically relative to the cross-section of the hollow chamber (1.2) in such a manner that sealing lips (1.5, 1.6) of variable width are produced, more especially in such a manner that only one of the two edges of the slot (1.3) forms an effective sealing lip (1.5).

## Revendications

1. Profilé d'étanchéité (1) en matériaux élastomères qui sert à l'étanchéité de l'intervalle périphérique entre le bord d'une ouverture pouvant être fermée par une porte ou un hayon dans une carrosserie de véhicule automobile et qui présente une zone d'étanchéité (1.5, 1.6) formée pour assurer l'étanchéité de la transition avec un panneau de garniture (2) contigu à l'ouverture, ou avec un élément analogue,
**caractérisé en ce que** le profilé d'étanchéité comprend, sur son côté extérieur tourné vers le panneau de garniture (2), une chambre creuse (1.2) s'étendant en direction longitudinale, chambre creuse dont la paroi extérieure est dotée, dans la partie longitudinale prévue pour venir en appui sur le panneau de garniture (2), d'une fente (1.3) s'étendant en direction longitudinale, fente dans laquelle peut s'introduire un bord longitudinal (2.1) du panneau de garniture (2), de sorte que les zones adjacentes de paroi de la chambre, parallèles à la fente (1.3), s'appliquent sur le panneau de garniture (2) le long du bord longitudinal (2.1) à la façon de lèvres d'étanchéité (1.5 et/ou 1.6).

2. Profilé d'étanchéité selon la revendication 1, **caractérisé en ce qu'**il comprend une fente longitudinale (1.3) exclusivement dans la partie longitudinale de la chambre creuse (1.2) prévue pour venir en appui sur le panneau de garniture (2).

3. Profilé d'étanchéité selon la revendication 1 ou 2, **caractérisé en ce que** la fente (1.3) est formée comme une découpe à travers la paroi du profilé déjà réticulée ou vulcanisée.

4. Profilé d'étanchéité selon la revendication 1 ou 2, **caractérisé en ce que** la fente (1.3) est formée par un arrachement - en particulier partiel - d'une ligne de faiblesse produite dans la paroi extérieure de la chambre creuse (1.2) lors du formage du profilé d'étanchéité.

5. Profilé d'étanchéité selon l'une des revendications 1 à 4, **caractérisé en ce que** la fente (1.3) est limitée, au niveau de ses extrémités, par des cavités arrondies (1.4).

6. Profilé d'étanchéité selon l'une des revendications 1 à 5, **caractérisé en ce que** la chambre creuse (1.2) présente une section transversale plate, de façon telle que sa dimension dans la direction d'une courbure prévue du profilé d'étanchéité soit égale au maximum à la moitié de la dimension perpendiculaire par rapport à cette direction.

7. Profilé d'étanchéité selon l'une des revendications 1 à 6, **caractérisé en ce que** la fente (1.3) est disposée de façon asymétrique par rapport à la section transversale de la chambre creuse (1.2), de façon telle que l'on obtienne des lèvres d'étanchéité (1.5, 1.6) de largeur différente, en particulier **en ce que** seulement un des deux bords de la fente (1.3) forme une lèvre d'étanchéité (1.5) efficace.
